# FASCICULE DE BREVET EUROPEEN

(11) **EP 0 540 402 B1**
(45) Date de publication et mention de la délivrance du brevet: **08.12.1999**
(21) Numéro de dépôt: 92402895.4
(22) Date de dépôt: 26.10.1992
(51) Int. Cl.: G06T 1/20, G06T 7/00

(54) **Réseau de résistances binaires et son utilisation pour l'étiquetage de composantes connexes d'images numérisées en vision artificielle**
Netzwerk binärer Widerstände und dessen Gebrauch für die Etikettierung von verbündenen Komponenten numerischer Bilder
Binary resistance network used for the labelling of digital image connected components in computer vision

(30) Priorité: 31.10.1991 FR 9113466
(43) Date de publication de la demande: 05.05.1993
(73) Titulaire: FRANCE TELECOM, 75015 Paris (FR); CENTRE NATIONAL DE LA RECHERCHE SCIENTIFIQUE, 75007 Paris (FR)
(72) Inventeur: Devos, Francis, F-91405 Orsay Cédex (FR); Ni, Yang, F-91940 Les Ulis (FR)
(74) Mandataire: Fréchède, Michel

(56) Documents cités:
- WO-A-88/06322
- WO-A-89/04017

## Description

La réalisation de fonctions de vision artificielle a pour objet, à partir du traitement de l'information d'images bidimensionnelles, d'extraire de ces images des informations symboliques pertinentes. L'extraction de telles informations symboliques implique, d'une part, une fonction de mesure quantitative d'une information relative à une donnée d'image, telle que la luminance pour un point image, ou pixel, et d'autre part, une fonction cognitive par une fusion des informations issues de la fonction de mesure.

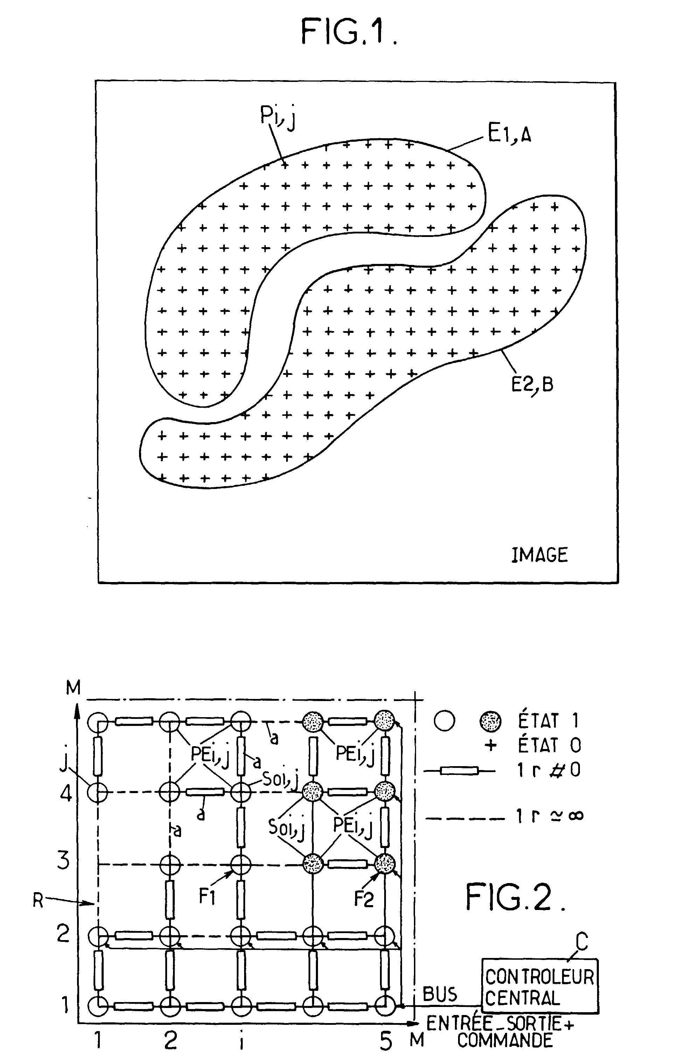

L'une des fonctions cognitives d'un intérêt majeur consiste, ainsi que représenté de manière schématique en figure 1, pour une image donnée, à discriminer dans cette image un ou plusieurs objets ou entités discrètes E1, E2, appelées composantes connexes, formant une telle image.

Une solution, afin de réaliser une telle fonction de discrimination ou de séparation d'objets ou entités discrètes précitées a, jusqu'à ce jour, consisté à réaliser des machines cellulaires de vision artificielle consistant essentiellement en un tableau bidimensionnel de processeurs, chaque processeur assurant des opérations locales ou ponctuelles pour un pixel correspondant. Ainsi, dans le cas plus particulier d'images numérisées de type binaire, chaque pixel ayant une valeur de luminance 0 ou 1, les processeurs de ce type de machine permettent-ils d'associer à chaque pixel de même valeur d'une même entité discrète un même repère, désigné par étiquette de composante connexe, chacun des pixels précités constituant un élément constitutif de cette entité discrète. L'entité discrète E1, E2 est alors discriminée, indépendamment de toute considération relative à sa forme ou son étendue géométrique, par la règle d'unicité de l'étiquette A ou B pour chaque entité discrète considérée.

Actuellement, de nombreux algorithmes d'attribution d'étiquettes, et donc de discrimination des composantes connexes, ont été proposés, notamment pour des configurations de machines massivement parallèles. A titre d'exemple, on pourra utilement se reporter aux travaux publiés par R. Cypher, J.L.C. Sanz, L. Synder "Algorithms for Image Component Labeling on SIMD Mesh connected computers" Proceedings 1987 Intl. Conference on Parallel Processing.

Toutefois, presque tous les algorithmes proposés sont basés sur la mise en oeuvre de machines d'usage général, lesquelles ne peuvent satisfaire la nécessité de mise en oeuvre d'un réseau d'interconnexions performant, notamment pour la mise en oeuvre des algorithmes utilisés dans la vision artificielle.

En outre, certains des algorithmes précités, bien qu'ils nécessitent un temps d'exécution symptotiquement court, ne peuvent être mis en oeuvre qu'au prix d'une complexité de progammation très importante, d'un coût en matériel rédhibitoire, par réseaux d'interconnexion non locaux tels que pyramidaux, hypercubes ou autres.

A titre d'exemple non limitatif, on rappellera que les algorithmes correspondants utilisés sur des machines à processeurs massivement parallèles, telles que réalisées par la société GOODYEAR AEROSPACE aux Etats-Unis d'Amérique demandent pour la réalisation d'un processus d'étiquetage de composantes connexes d'images binaires de 128 x 128 pixels, hors temps d'entrée-sortie des signaux, de 30 à 900 ms pour une puissance crête de calcul de 6553 millions d'opérations par seconde, sur des nombres codés sur 8 bits.

En outre, un réseau de résistances binaires est décrit par le document WO 88/06322 publié le 25 août 1988. Le réseau de résistances binaires décrit par ce document comprend une pluralité de sommets reliés chacun par des arcs, formant résistance binaire, dans lequel chaque sommet comporte un processeur élémentaire permettant, à partir d'un contrôleur central, d'associer à chacun des arcs au moins une fonction associative et à un ou plusieurs sommets une contrainte binaire permettant d'assurer un traitement sélectif de données mémorisées au niveau de chacun des processeurs élémentaires. En outre, chaque arc du réseau est muni d'une fonction OU par l'intermédiaire de chaque processeur élémentaire et chaque arc du réseau forme une chaîne de Manchester. Toutefois, un tel réseau, en l'absence de circuit de commande d'activation-inhibition de l'injection de contrainte binaire au niveau de chaque sommet, ne permet pas un contrôle par itération successive des étapes d'injection et de mémorisation pour une pluralité de valeurs de contraintes binaires successives.

La présente invention a pour objet de remédier aux inconvénients précités et de proposer la mise en oeuvre d'un réseau de résistances binaires et son utilisation, notamment pour l'étiquetage de composantes connexes d'images numérisées en vision industrielle.

Un autre objet de la présente invention est la réalisation d'un tel réseau pour le traitement d'images numérisées de 256 x 256 pixels sous forme d'un circuit intégré monolithique.

Un autre objet de la présente invention est la mise en oeuvre d'un protocole d'utilisation d'un tel réseau pour l'étiquetage de composantes connexes d'images numérisées en vision artificielle.

Le réseau de résistances binaires, objet de la présente invention, est conforme à l'objet de la revendication 1.

Le réseau de résistances binaires, objet de la présente invention, trouve application à l'étiquetage des composantes connexes d'images numérisées, et de manière plus générale au traitement d'images et à la détection de mouvement.

Une description plus détaillée d'un réseau de résistances binaires conforme à l'objet de la présente invention et de son utilisation pour l'étiquetage de composantes connexes d'images numérisées sera donnée ci-après en relation avec les dessins dans lesquels, outre
la figure 1 relative à l'art antérieur,
la figure 2 représente, de manière schématique, la configuration spatiale d'un réseau de résistances binaires objet de la présente invention,
la figure 3a représente un schéma général non limitatif de l'implantation d'un processeur élémentaire, associé à chaque sommet du réseau de résistances binaires objet de la présente invention,
la figure 3b représente un diagramme explicatif de mise en oeuvre des processeurs élémentaires consitutifs du réseau de résistances binaires objet de la présente invention,
la figure 3c représente de manière plus détaillée un schéma d'un circuit de commande d'application d'une contrainte binaire au niveau des sommets réunis par des arcs dans le réseau objet de l'invention mettant en oeuvre une chaîne de Manchester accélérée,
la figure 3d représente un chronogramme des signaux de commande de chaque processeur élémentaire constitutif du réseau objet de la présente invention,
la figure 4 représente une configuration générale de l'implantation des processeurs élémentaires pour former le réseau de résistances binaires objet de la présente invention,
la figure 5a représente un schéma synoptique d'un système opérateur d'étiquetage des composantes connexes d'images numérisées, incorporant un réseau conforme à l'objet de la présente invention,
la figure 5b représente un organigramme général du mode opératoire du réseau de résistances binaires objet de la présente invention lors de son utilisation pour l'étiquetage de composantes connexes d'images numérisées,
la figure 6a représente un diagramme explicatif d'une procédure de recherche d'un maximum local, de la contrainte binaire appliquée, le processeur élémentaire associé contenant ce maximum restant seul actif pour l'entité discrète correspondante de l'image considérée,
la figure 6b représente un diagramme explicatif de diffusion segmentée d'une information binaire notée D dans les composantes connexes ou entités discrètes correspondantes de l'image considérée,
la figure 6c représente un processus d'étiquetage de composantes connexes ou entités discrètes d'une image au moyen d'un réseau de résistances binaires objet de la présente invention mettant en oeuvre une combinaison des processus de recherche de maximum local et de diffusion segmentée décrits précédemment en liaison avec les figures 6a et 6b,
la figure 6d représente un chronogramme des signaux de commande de chaque processeur élémentaire constitutif du réseau dans le cas de la mise en oeuvre de l'opérateur de la figure 5a et du processus correspondant illustré en figure 5b.

Une description plus détaillée du réseau de résistances binaires objet de la présente invention sera donnée en liaison avec la figure 2.

Ainsi qu'on l'a représenté sur la figure précitée, le réseau de résistances binaires objet de la présente invention comprend une pluralité de sommets reliés chacun à des arcs, ces arcs formant résistances binaires.

D'une manière non limitative, on a représenté le réseau R objet de la présente invention sous forme de réseau rectangulaire présentant un maillage rectangulaire, les sommets étant notés Soi,j et repérés par rapport à deux axes arbitraires de repère d'ordre de ligne j et de colonne i, les arcs étant notés a.

Selon une caractéristique avantageuse du réseau de résistances binaires objet de la présente invention, chaque sommet Soi,j comporte un processeur élémentaire, noté PEi,j, permettant à partir d'un contrôleur central, noté C, d'associer à chacun des arcs a au moins une fonction associative, et à un ou plusieurs sommets Soi,j, une contrainte binaire, notée de manière générale F, F1 ou F2 par exemple.

La ou les fonctions associatives associées à un ou plusieurs des arcs précités permet d'assurer un traitement sélectif, de type analogique, de données mémorisées au niveau de chacun des processeurs élémentaires PEi,j.

Selon une caractéristique particulièrement avantageuse du réseau de résistances binaires objet de la présente invention, chaque arc a du réseau est muni d'une fonction associative OU, par l'intermédiaire de chaque processeur élémentaire, ainsi qu'il sera décrit ci-après dans la description. La fonction logique OU est définie en logique positive et correspond à une fonction logique ET en logique négative.

Sur la figure 2, on a représenté symboliquement chaque arc établi en un état logique, noté 1, correspondant à une résistance sensiblement égale à 0 ou de valeur faible, r # 0, par un trait gras entre deux sommets respectifs consécutifs, alors qu'un arc a à l'état 0, c'est-à-dire sensiblement non conducteur, présente une résistance r, peu différente de la valeur infinie, les arcs précités présentant ainsi, selon leur état conducteur ou non conducteur, un rapport de conductance égal à par exemple 10⁶, cet état conducteur ou non conducteur correspondant, pour l'arc considéré, à un état logique 1 ou respectivement 0.

On notera en outre que le contrôleur central C est relié au réseau R par l'intermédiaire d'une liaison par BUS assurant les fonctions d'entrées-sorties et la fonction de commande de chacun des processeurs élémentaires PEi,j associé à chaque sommet correspondant So,i,j du réseau de résistances binaires objet de la présente invention.

D'une manière générale, on comprendra que le réseau de résistances binaires objet de la présente invention permet, suite à la configuration de ce réseau, c'est-à-dire à la création d'un état arbitraire précédemment cité pour chaque arc a et à l'application de contraintes, telles que F1 et F2 au niveau d'un ou plusieurs sommets Soi,j du réseau tel que représenté en figure 2, d'assurer un traitement de type analogique de ces contraintes, c'est-à-dire une diffusion segmentée des valeurs de contraintes, lesquelles s'analysent, soit en une valeur de tension ou une valeur de courant, dans les zones du réseau reliées de manière connexe par des arcs dont l'état logique est l'état 1, c'est-à-dire l'état conducteur.

Ce type de réseau est alors particulièrement avantageux pour le traitement bas niveau de la vision artificielle, à chaque sommet Soi,j du réseau pouvant alors être associé, au niveau du processeur élémentaire PEi,j correspondant, une valeur binaire de pixel par exemple, le traitement analogique des contraintes binaires appliquées, s'analysant en l'injection au niveau d'un ou plusieurs sommets Soi,j d'une tension ou d'un courant, étant assuré par le maillage conducteur réalisé par les arcs à l'état 1 sensiblement conducteurs configurés préalablement ou en cours de traitement sur des zones correspondantes du réseau.

On comprendra bien sûr que le traitement des contraintes binaires précédemment mentionnées peut être de nature analogique, toute tension ou tout courant injecté au niveau d'un des sommets constituant la contrainte binaire précitée ayant pour effet, en un sommet Soi,j déterminé d'une même zone préconfigurée, d'engendrer un niveau correspondant de courants, respectivement de tensions, correspondant à un produit de convolution des contraintes binaires ainsi injectées et des fonctions de transfert réalisées par les différents arcs selon leur état conducteur ou non-conducteur.

De la même manière, on comprendra que le traitement ainsi réalisé peut également être considéré comme un traitement de type logique dans la mesure où, à chaque sommet Soi,j du réseau considéré, le niveau de courant ou de tension correspondant peut être considéré comme une variable d'état logique correspondant à l'état logique du sommet considéré, cet état logique étant noté Si,j.

Toutefois, et selon un aspect particulièrement avantageux du réseau de résistances binaires objet de la présente invention, le temps d'établissement d'un réseau maillé classique, sur application d'une contrainte binaire par exemple, en un sommet Soi,j correspondant physiquement à un transfert d'énergie entre le point d'injection de la contrainte précitée et tout point connexe, relié par des arcs conducteurs, est normalement une fonction exponentielle du nombre de sommets ainsi reliés.

Conformément à un aspect particulièrement avantageux du réseau de résistances binaires objet de la présente invention, chaque arc du réseau forme une chaîne de Manchester accélérée de façon que le temps d'établissement du réseau, après application des contraintes binaires locales, soit ainsi linéaire avec le nombre de sommets Soi,j, ainsi qu'il sera décrit ultérieurement dans la description. On notera que l'introduction d'une chaîne de Manchester accélérée au niveau de chaque arc a du réseau à l'état conducteur permet de substituer à la propagation d'énergie précitée une propagation de type impulsionnel, ce qui, conformément à un aspect particulièrement avantageux du réseau de résistances binaires objet de la présente invention, permet de rendre le temps d'établissement du réseau, après application des contraintes binaires locales, sensiblement linéaires avec le nombre de sommets Soi,j constitutifs du réseau précité. Ainsi, les temps de traitement en fonction des applications considérées et, bien entendu, du nombre de sommets constitutifs du réseau objet de la présente invention, peuvent-ils être rendus jusqu'à 10 000 fois inférieurs par rapport au temps de traitement de réseau de l'art antérieur.

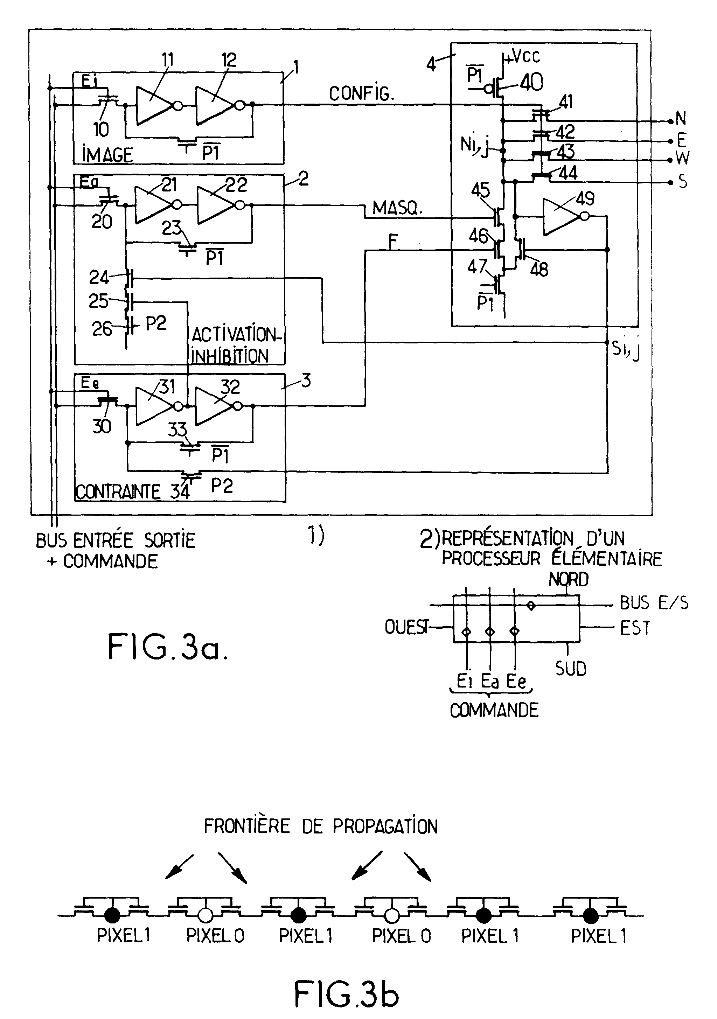

Une description plus détaillée d'un processeur élémentaire PEi,j sera maintenant donnée en liaison avec la figure 3a.

Au point 1 de la figure précitée, on a représenté un processeur élémentaire particulièrement adapté à la mise en oeuvre du réseau de résistances binaires objet de la présente invention.

D'une manière générale, chaque processeur élémentaire permet d'assurer au moins la configuration du réseau par le choix et la commande de la valeur de la résistance binaire de chaque arc réunissant deux sommets consécutifs, l'injection de la valeur de contrainte F au niveau de chaque sommet Soi,j, l'absence d'injection d'une contrainte binaire correspondant à l'injection d'une valeur de contrainte binaire égale à 0, ainsi que la lecture de l'état local Si,j, résultant pour le sommet considéré ou pour tout sommet Soi,j, d'une zone segmentée définie par l'ensemble des sommets reliés par des arcs à l'état conducteur ainsi que représenté en figure 2.

En outre, et pour des traitements appropriés, chaque processeur élémentaire PEi,j permet de réaliser la mémorisation d'un état conditionnel Ai,j en fonction de la contrainte binaire injectée et de l'état local Si,j du sommet considéré.

Enfin, et de manière avantageuse, chaque processeur élémentaire PEi,j permet d'effectuer l'itération successive des étapes d'injection et de mémorisation précitées pour une pluralité de valeurs de contraintes binaires successives correspondant, par exemple, à des données numérisées sous forme de plans de bits.

Une description plus détaillée d'une application d'un réseau de résistances binaires tel que représenté en figure 2 à l'étiquetage des composantes connexes, c'est-à-dire des pixels voisins de même valeur d'une entité discrète d'une image, sera donnée à cet effet ultérieurement dans la description.

Ainsi qu'on l'a représenté en outre en figure 3a, chaque processeur élémentaire PEi,j comporte au moins un registre 1 de mémorisation de l'information numérisée à traiter, c'est-à-dire de l'image binarisée, ce registre étant commandé en écriture-lecture à partir d'une liaison par BUS entrées-sorties et délivrant en lecture un signal, noté config, permettant de configurer le réseau, c'est-à-dire d'attribuer à chaque arc a l'état conducteur, état 1, ou l'état non conducteur, l'état 0.

Chaque processeur élémentaire comporte également un registre 2 de commande d'activation-inhibition de l'injection de contrainte binaire F au niveau du sommet Soi,j considéré correspondant, auquel le processeur élémentaire PEi,j est associé. Ce registre de commande 2 est commandé en écriture-lecture à partir de la liaison par BUS entrées-sorties précitée et délivre en lecture un signal masq de masquage de l'injection de la contrainte binaire précitée ainsi qu'il sera décrit ci-après dans la description.

Chaque processeur élémentaire PEi,j comporte également un registre 3 de mémorisation de la contrainte binaire F à imposer au sommet correspondant considéré Soi,j.

Le processeur élémentaire PEi,j précité comporte enfin un circuit 4 formant noeud Ni,j pour le réseau. On notera que le noeud Ni,j et le processeur élémentaire associé correspondant PEi,j forment le sommet Soi,j du réseau de résistances binaires.

Ainsi qu'on le remarquera à l'observation de la figure 3a au point 1 de celle-ci, le circuit formant noeud Ni,j comporte avantageusement 4 transistors de commutation 41, 42, 43, 44 formant chacun transistor d'arc. Chaque transistor d'arc est repéré de manière avantageuse par son orientation relative nord-sud-est-ouest, notée N,S,E,W, et est destiné à assurer la liaison du noeud considéré avec un noeud voisin. Chaque transistor d'arc reçoit sur son électrode de commande le signal de configuration config délivré par le registre 1 de mémorisation de l'information numérisée à traiter.

En outre, le circuit formant noeud Ni,j comprend un transistor de précharge, noté 40, connecté entre la tension d'alimentation du processeur élémentaire +Vcc, et le noeud Ni,j, ce transistor de précharge étant commandé en commutation par un signal de précharge, noté P1.

Le circuit formant noeud Ni,j comprend également un circuit 45, 46, 47 de commande d'activation-inhibition de l'injection de la contrainte binaire au niveau du sommet Soi,j considéré. Ce circuit de commande d'activation-inhibition comprend, d'une part, en cascade entre le noeud et le potentiel de référence (la masse) un premier transistor 45 d'activation-inhibition recevant sur son électrode de commande le signal masq de masquage délivré en lecture par le registre d'activation-inhibition 2, un deuxième transistor 46 d'injection de contrainte binaire F recevant sur son électrode de commande le signal de contrainte binaire F délivré par le registre de mémorisation de contrainte binaire 3 et un troisième transistor 47 de terminaison, de type de conduction opposé à celui du transistor de précharge.

Le circuit de commande d'activation-inhibition comprend, d'autre part, un circuit de réaction formé par un transistor 48 de réaction, monté en commutation entre le noeud Ni,j et le point commun entre le deuxième, 46, et le troisième, 47, transistors et par un inverseur logique 49 dont l'entrée est connectée au noeud Ni,j et dont la sortie, délivrant le signal Si,j représentatif de l'état local du sommet Soi,j considéré, est connectée à l'électrode de commande du transistor 48 de réaction et à une entrée de contrôle du registre mémoire 2 d'activation-inhibition et du registre 3 de mémorisation de contrainte binaire.

Sur le point 2 de la figure 3a, on a représenté du point de vue entrées-sorties un processeur élémentaire PEi,j. Chaque processeur élémentaire comporte, ainsi que représenté, un BUS d'entrée-sortie et de commande, le BUS de commande proprement dit permettant la transmission d'un signal de commande du registre 1 d'image Ei, du registre 2 activation-inhibition Ea, et du registre de contrainte 3 Ee, ainsi que bien entendu les transistors d'arc connectés aux sorties nord N, est E, ouest W, et sud S.

On notera que l'interconnection de deux processeurs élémentaires voisins, PEi,j et PEi,j+1 par leurs connections respectives nord et sud, selon la convention adoptée pour la figure 2, a pour effet en réalité de constituer chaque arc a du réseau de résistances binaires objet de la présente invention par deux transistors de commutation connectés en série, les transistors 41 du processeur élémentaire PEi,j et 44 du processeur élémentaire voisin PEi,j+1, du fait de la connection des sorties nord et sud des deux processeurs élémentaires précités. Bien entendu, il en est de même pour la connection de tout processeur élémentaire PEi,j à tout processeur voisin de ce dernier. Un tel mode de réalisation est représenté en figure 3b pour une ligne ou une colonne du réseau tel que représenté en figure 2, à chaque sommet Ni,j du réseau étant associé un pixel de valeur 1 ou 0. Le chemin de propagation d'information est interrompu au niveau de chaque arc a si un seul des transistors constituant en fait chaque arc du réseau reçoit une tension nulle, par exemple sur son électrode de commande, ainsi qu'il sera décrit ultérieurement dans la description.

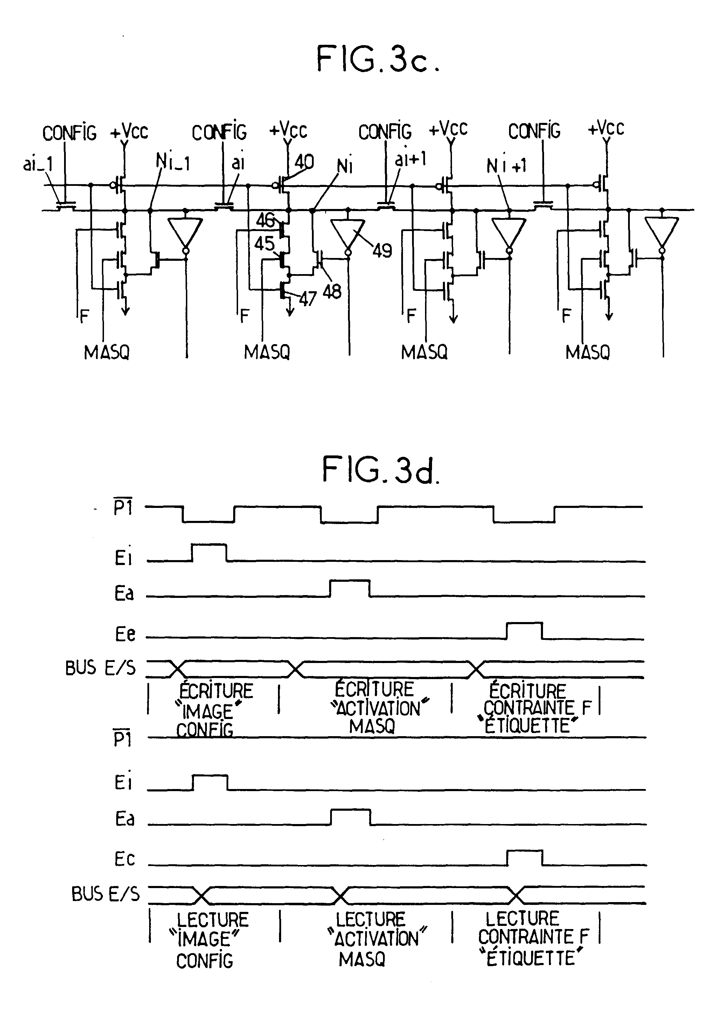

Selon une caratéristique particulièrement avantageuse du réseau de résistances binaires objet de la présente invention, ainsi qu'il sera décrit maintenant de manière plus détaillée en liaison avec la figure 3c, les circuits formant noeud Ni,j du réseau interconnectés par les transistors d'arcs forment de manière particulièrement avantageuse une chaîne de Manchester accélérée.

Sur la figure 3c, on a représenté une telle chaîne, cette chaîne correspondant par exemple à celle d'une ligne du réseau représentée en figure 2 lorsque, par hypothèse non limitative, les arcs a-i sont tous rendus conducteurs, une telle ligne pouvant correspondre dans la représentation de la figure 2 à la ligne n° 1 par exemple. Dans le cas de la figure 3c, on considère donc pour la notation, j = 1, l'indice j n'étant donc pas précisé pour la description de la figure précitée.

Le fonctionnement de la chaîne de Manchester ainsi réalisée est le suivant :
chaque circuit de commande réalisé par les transistors 40, 45, 46, 47 et interconnecté par les transistors d'arcs rendus conducteurs permet d'effectuer, suite à une étape de précharge par la commande d'un signal de phase **P1** permettant d'amener le potentiel de chaque noeud Ni,j à la valeur de la tension d'alimentation, une étape de fin de précharge et de connection du troisième transistor 47 de terminaison au potentiel de référence, la masse, en raison du caractère de type de conductivité opposé des transistors 40 et 47. En fonction du signal de masquage, masq, et du signal de contrainte binaire, F, appliqués sur les transistors 45 et 46, une étape de décharge des capacités parasites du noeud Ni, et donc du noeud Ni,j considéré, est effectuée par l'intermédiaire du circuit de réaction 48, 49. D'une manière générale, on comprendra que le circuit de réaction précité, par l'intermédiaire de l'inverseur logique 49, permet de rendre cumulatif le phénomène de décharge des capacités parasites précitées et de réaliser celle-ci en un temps très bref, de façon à lui donner le caractère de décharge de type impulsionnel. La décharge des capacités parasites précitées au noeud Ni, et donc Ni,j, permet d'abaisser ainsi le potentiel du noeud considéré, lequel, du fait de la conduction des transistors d'arc et de l'arc a-i correspondant, provoque à son tour la décharge du noeud Ni+1 ou Ni-1 immédiatement voisin et ainsi de suite.

Un tel mode opératoire permet d'assurer la décharge des capacités parasites de tous les noeuds interconnectés au sommet Soi,j correspondant formant les sommets connexes de ce dernier, siège de la décharge initiale. La diffusion segmentée de la contrainte binaire locale appliquée au niveau du sommet Soi,j considéré vers les sommets connexes est ainsi réalisée. En outre, par le mode opératoire précité, le temps de traitement et d'établissement du réseau de résistances binaires objet de la présente invention est rendu linéaire en fonction du nombre de sommets, ce qui permet de réduire dans un rapport de 1/10 000 le temps de traitement par rapport aux dispositifs de l'art antérieur.

Le fonctionnement de chaque processeur élémentaire PEi,j et de la chaîne de Manchester, telle que représentée en figure 3b, sera décrit de manière générale en liaison avec la figure 3d.

Les registres d'image 1 d'activation-inhibition 2 et de contrainte 3 sont constitués respectivement par des bascules formées par deux inverseurs logiques en cascade, 11-12, 21-22 et 31-32, et par un transistor de bouclage 13, 23, respectivement 33, ces transistors étant commandés par un signal de commande P1, c'est-à-dire le signal de commande de précharge du transistor de précharge 40 précédemment mentionné. Bien entendu, le signal de précharge P1 est délivré par le BUS de commande à partir du contrôleur central C. L'entrée à l'écriture, respectivement à la lecture des bascules ainsi constituées est commandée pour chaque registre par l'intermédiaire d'un transistor noté 10, 20, respectivement 30, chacun de ces transistors étant commandé par un signal de commande délivré par le BUS de commande, chaque signal étant noté respectivement Ei, Ea, Ee. L'écriture, respectivement la lecture, dans les registres image 1, activation-inhibition 2 et contrainte 3 est effectuée à partir du seul BUS d'entrées-sorties à partir des signaux de précharge P1 précités et des signaux de commande Ei, Ea et Ee, tels que représentés en figure 3d. On notera que la phase d'écriture correspond à la mémorisation dans chacun des registres précités des signaux de configuration, config, respectivement de masquage, masq, de la contrainte F.

De même, l'étape de lecture des registres précités permet d'engendrer le signal de configuration, config, appliqué aux transistors d'arcs 41, 42, 43, 44, respectivement de masquage, masq, de la contrainte F. La mise à jour du registre activation-inhibition 2 est effectuée par l'intermédiaire des transistors 24 et 25 et d'un transistor de terminaison 26 permettant une synchronisation de cette mise à jour par l'intermédiaire d'un signal de phase P2 délivré par le BUS de commande. Les deux transistors 24 et 25 sont commandés, d'une part, par la valeur de l'état local Si,j, du noeud Ni,j correspondant, c'est-à-dire par le signal délivré par l'inverseur logique 49 du circuit de réaction, respectivement par le signal délivré par l'inverseur logique 31, ces deux transistors 24 et 25 réalisant ainsi une fonction ET entre l'état local du noeud correspondant Ni,j et la contrainte F à appliquer effectivement à celui-ci. Ainsi, lorsque la valeur 0 est inscrite dans le registre de mémorisation activation-inhibition 2, c'est-à-dire lorsqu'en phase de lecture, le signal de masquage, masq, a cette valeur 0, la valeur de l'état local du noeud Ni,j, c'est-à-dire le signal Si,j après le temps d'établissement du réseau est égale à 1, ce qui permet la mise à jour du registre activation-inhibition.

Le registre contrainte ou étiquette 3 enregistre un bit de la contrainte courante associée au sommet Soi,j considéré, la contrainte courante pouvant être remplacée conditionnellement par la valeur de l'état local du neud Ni,j, c'est-à-dire par la valeur du signal Si,j, du sommet Soi,j considéré par l'intermédiaire du transistor 34 commandé également par le signal de phase P2.

Grâce au fonctionnement du processeur élémentaire PEi,j tel que représenté en figure 3a, et, finalement 3c, la contrainte mémorisée au niveau du registre de contrainte 3 peut ou non être appliquée au noeud Ni,j correspondant, c'est-à-dire au sommet Soi,j associé, par l'intermédiaire de la fonction ET réalisée par les transistors 45 et 46 du circuit de commande d'activation-inhibition de l'injection de la contrainte binaire au niveau du sommet considéré.

Bien entendu, chaque processeur élémentaire peut être réalisé en technologie C-MOS, sous forme de circuit intégré, l'ensemble du réseau de résistances binaires objet de la présente invention étant également réalisé au moyen de cette technologie.

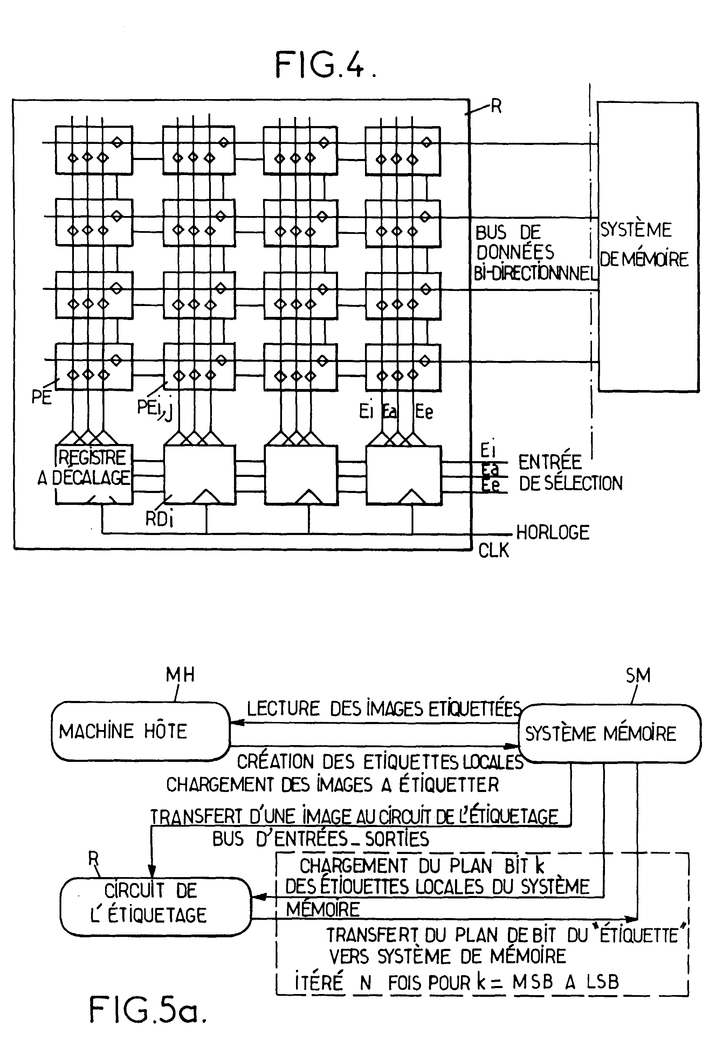

Une description d'un tel réseau est représentée en figure 4 au moyen de la représentation de chaque processeur élémentaire donnée au point 2 de la figure 3a. De préférence, le réseau est réalisé sous forme d'une matrice de processeurs élémentaires PEi,j, chaque processeur étant connecté à ses voisins nord, sud, est et ouest. La matrice de processeurs élémentaires telle que représentés en figure 4 peut être réalisée simplement par une duplication des processeurs élémentaires tels que représentés en figure 3a. De préférence, les BUS d'entrées-sorties des processeurs élémentaires appartenant à la même ligne sont connectés ensemble, BUS de données bidirectionnel, et partagent donc un même plot d'entrée-sortie. Une telle configuration implique que les processeurs élémentaires d'une même ligne doivent être chargés ou déchargés séquentiellement. Une telle opération peut être effectuée par l'intermédiaire d'une ligne de registre à décalage, un registre à décalage RDi étant associé à une colonne de processeurs élémentaires correspondants. La ligne de registres à décalage décale de la droite vers la gauche par exemple les signaux de commande Ei, Ea, Ee précédemment décrits en sélectionnant la colonne de processeurs élémentaires correspondante, ces signaux étant alors transmis simultanément en parallèle à tous les processeurs élémentaires d'une même colonne. Ainsi; un réseau constitué par une matrice de 256 x 256 processeurs élémenaires demande 256 plots d'entrées-sorties pour le BUS de données d'entrées-sorties.

Sur la figure 4, on a également représenté, au niveau de chaque registre à décalage, un signal d'horloge, noté CLK, lequel permet d'engendrer les signaux de précharge **P1** et de phase P2.

En outre, sur cette même figure, on a représenté un système mémoire, ce système-mémoire étant une mémoire rapide externe. Ce système mémoire peut avantageusement être réalisé par une partie d'une machine hôte dans une utilisation déterminée. Ce système-mémoire permet de stocker les données d'entrées et tous les résultats de traitement obtenus par la mise en oeuvre du réseau de résistances binaires objet de la présente invention, les images binaires ou binarisées à traiter ainsi que le contenu des registres d'activation-inhibition de chaque processeur élémentaire. Ce système de mémoire peut être réalisé par des mémoires double port parties de l'espace mémoire de la machine hôte. A ce titre, le système de mémoire ne fait pas partie à proprement parler du réseau de résistances binaires objet de la présente invention.

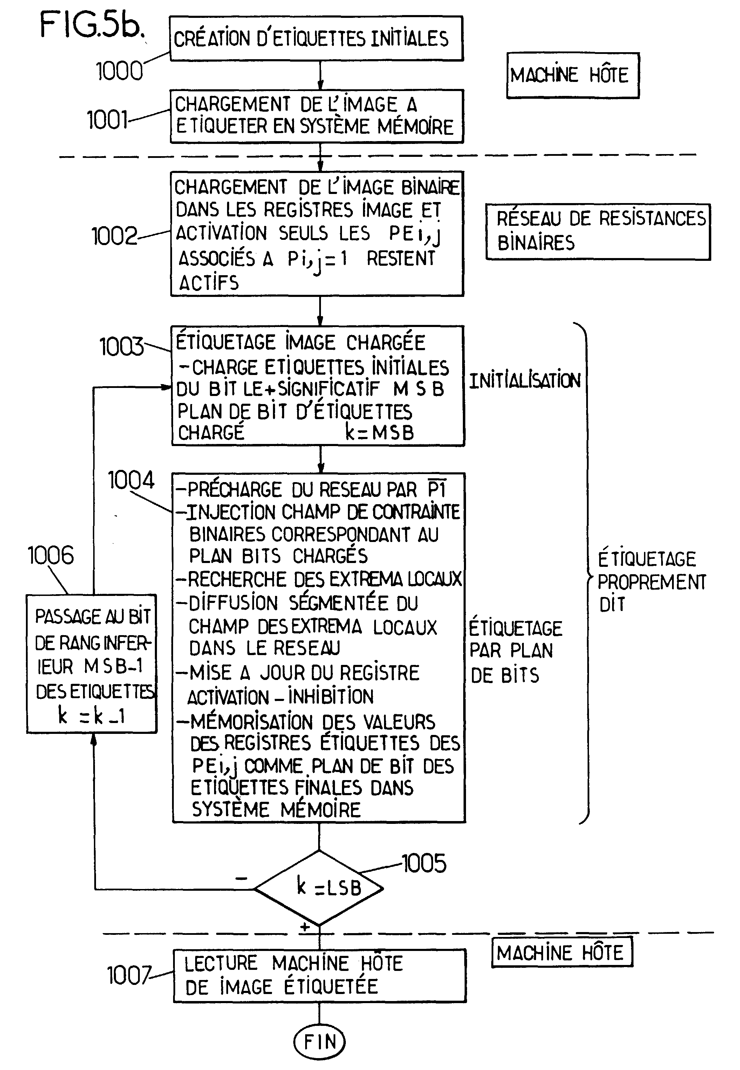

Une description plus détaillée d'une utilisation du réseau de résistances binaires objet de la présente invention pour l'étiquetage des composantes connexes d'une image binaire ou d'un plan de bits formant image élémentaire binaire d'une image binarisée sera maintenant décrite en liaison avec les figures 5a et 5b.

Sur la figure 5a, on a représenté l'agencement par éléments fonctionnels, d'un opérateur permettant d'assurer l'étiquetage des composantes connexes d'une image, le terme image correspondant à la définition précédemment mentionnée.

Dans l'application ou utilisation du réseau de résistances binaires à l'étiquetage des composantes connexes d'une image binaire, on notera que la contrainte appliquée à un sommet Soi,j du réseau de résistances binaires selon l'invention correspond, pour cette application, à l'attribution d'une valeur d'étiquette ou, à tout le moins, d'un bit du plan de bits de l'étiquette correspondante au sommet Soi,j considéré. En conséquence, le mot contrainte précédemment utilisée dans la description, en particulier contrainte binaire, peut être remplacé dans cette application par le mot étiquette ou par la valeur du bit du plan de bit d'étiquette correspondant, lequel joue le rôle de contrainte binaire.

Ainsi qu'on l'a représenté en figure 5a, un opérateur permettant d'assurer l'étiquetage des composantes connexes d'une image conformément à l'objet de la présente invention comprend une machine hôte MH munie de son système mémoire SM, les opérations entre la machine hôte et le système mémoire précité consistant en la création des étiquettes locales et au chargement des images à étiqueter dans le système mémoire SM, à partir de la machine hôte, et réciproquement en une lecture des images étiquetées par la machine hôte dans le système mémoire SM. En outre, l'opérateur précité comprend, bien entendu, interconnecté au système mémoire SM le réseau R formant circuit d'étiquetage, ce réseau correspondant au mode de réalisation des figures 2 et 4 par exemple. Les échanges entre le système mémoire SM et le réseau R, tel que représenté en figure 5a, consistent, d'une part, en le transfert d'une image au circuit d'étiquetage ou réseau R, le chargement du plan de bits k des étiquettes locales du système mémoire, k désignant le poids des bits de l'ensemble des étiquettes attribuées normalement à chaque pixel, et le transfert ou circuit d'étiquetage du plan de bits étiquette après traitement vers le système de mémoire SM, ces deux dernières opérations étant soumises à itération du bit le plus significatif MSB au bit le moins significatif LSB.

Dans l'utilisation précitée, l'étiquetage des composantes connexes d'une image binaire consiste, en une étape 1000, à attribuer à l'ensemble des bits de valeur donnée de l'image une étiquette initiale locale commune, de valeur arbitraire, puis en une étape 1001, à charger l'image à étiqueter dans le système de mémoire de travail, SM, ces opérations précitées étant effectuées au sein de la machine hôte.

L'utilisation pour l'étiquetage des composantes connexes de l'image consiste ensuite en une étape 1002 à charger, à partir du système de mémoire de travail, l'image dans les registre image et registre activation-inhibition de chaque processeur élémentaire PEi,j. Ainsi, à un processeur élémentaire précité est associé un pixel Pi,j de l'image. En outre, seuls les processeurs élémentaires PEi,j associés à un pixel correspondant Pi,j de valeur donnée, la valeur 1, par exemple, de l'image considérée restent actifs. Une telle opération permet de déterminer les frontières de recherche dans l'image pour la fonction d'étiquetage proprement dite.

Suite à l'étape 1002 précitée, l'utilisation consiste alors à effectuer un processus d'étiquetage proprement dit en une opération 1003 et 1004. L'opération 1003 consiste en un processus d'initialisation comprenant une étape de chargement du bit le plus significatif MSB des étiquettes locales au niveau du registre de mémorisation d'étiquettes 3 de chaque processeur actif PEi,j, de façon à réaliser, sur le réseau, un chargement d'un plan de bit d'étiquettes. Le processus 1003 précité est suivi d'un processus 1004 d'étiquetage par plan de bits pour le plan de bits considéré. Le processus 1004 consiste à effectuer successivement une précharge du réseau par l'application du signal de précharge P1 au transistor 40 de précharge, une injection au niveau des sommets Soi,j correspondants du réseau, des contraintes binaires F ou valeur de bit d'étiquette correspondant au plan de bits chargés, une recherche des extrema, minima ou maxima locaux au sommet Soi,j du réseau, une diffusion segmentée du champ des extrema locaux dans le réseau, une mise à jour du registre activation-inhibition 2, puis une mémorisation des valeurs des registres des étiquettes des processeurs élémentaires PEi,j comme plans de bits des étiquettes finales dans le système mémoire.

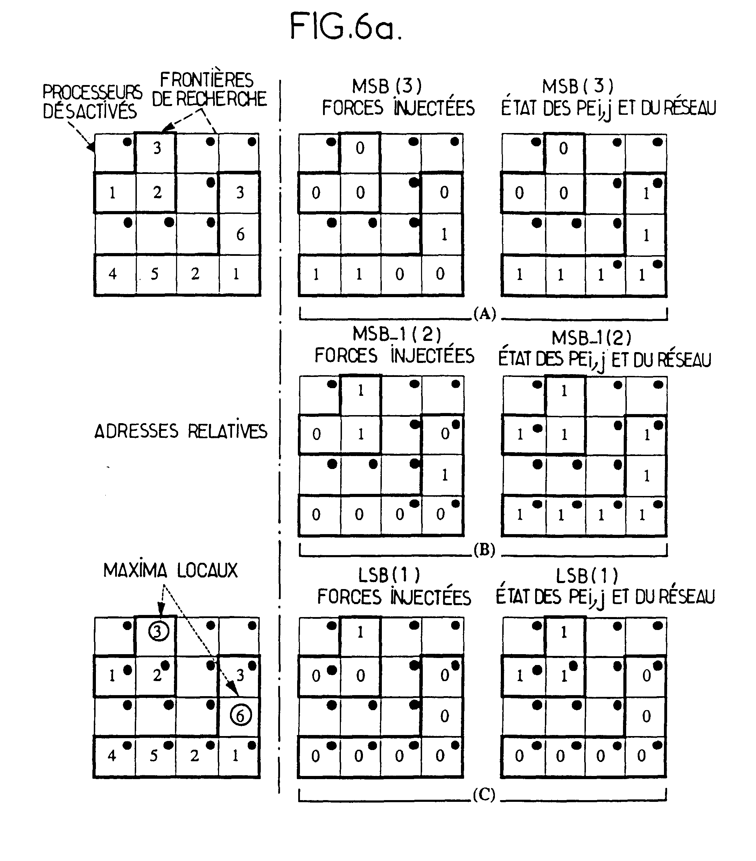

Bien entendu, le processus d'étiquetage proprement dit est réitéré pour chaque plan de bit de rang inférieur, MSB - 1 des étiquetes jusqu'au bit le moins significatif LSB par l'intermédiaire d'un test 1005 de comparaison du rang k du plan de bits à la valeur LSB suivi, dans la négative, par une étape de décrémentation du rang k considéré 1006 et d'un retour à l'étape d'initialisation 1003 précédemment décrite. Le test 1005, dans l'affirmative, est ensuite suivi d'une étape 1007 de lecture par la machine hôte de l'image étiquetée, puis d'une étape de fin par exemple. Bien entendu, les étapes 1002, 1003, 1004, 1005, 1006 sont effectuées par l'opérateur au niveau du réseau de résistances binaires R, l'étape 1007 étant effectuée à nouveau par la machine hôte. Une description plus détaillée du processus de recherche des extrema, minima ou maxima locaux au sommet Soi,j du réseau sera maintenant donnée en liaison avec la figure 6a dans le cadre non limitatif de la recherche des maxima.

Sur la figure 6a, on a représenté la matrice des processeurs élémentaires PEi,j par une grille carrée, chaque carré élémentaire représentant un processeur élémentaire. Les processeurs -élémentaires désactivés, c'est-à-dire inhibés par exemple par la commande du transistor de masquage 45 du circuit de commande d'activation-inhibition, sont représentés par un point dans le carré correspondant. Les frontières de recherche sont déterminées suite à l'étape 1002 de chargement de l'image, les frontières de recherche étant de ce fait délimitées par des pixels de valeur 0, c'est-à-dire sur la matrice de processeurs élémentaires constitutives du réseau par des processeurs élémentaires désactivés. En outre, sur la figure 6a, les chiffres 1 à 3 représentent, à titre d'exemple non limitatif, les adresses relatives des processeurs élémentaires maintenus actifs, ces adresses étant par exemple codées sur 3 bits dans le seul cadre de la figure 6a et suivantes. Ainsi, il apparaît que dans les frontières de recherche définies sur cette figure, les maxima locaux des adresses sont les chiffres 3, respectivement 6.

Le processus de recherche des maxima locaux consiste ensuite, à l'étape A représentée en figure 6a, à injecter le bit le plus significatif MSB, sous forme de contrainte binaire, de l'étiquette actuelle au niveau des sommets Soi,j du réseau, puis à masquer tous les processeurs élémentaires PEi,j pour lesquels le bit le plus significatif MSB est différent de la valeur actuelle de l'état Si,j du sommet Soi,j correspondant. Dans l'exemple de la figure 6a, au point A de celle-ci, on a fait apparaître à gauche les contraintes binaires, c'est-à-dire les valeurs du bit le plus significatif de l'étiquette des adresses correspondantes pour le processeur élémentaire PEi,j correspondant et, à droite, l'état des processeurs élémentaires PEi,j du réseau, les processeurs élémentaires dont la valeur actuelle Si,j du noeud Ni,j du sommet Soi,j est différente de la valeur du bit le plus significatif MSB correspondant étant masqués, c'est-à-dire inhibés, et donc munis d'un point sur la partie droite du point A de la figure 6a.

Une itération des étapes d'injection et de masquage précédemment décrites avec le point A de la figure 6a est alors effectuée, d'une part, au point B de cette même figure pour le bit de rang MSB - 1 inférieur jusqu'au rang du bit le moins significatif LSB, le bit de rang 1 dans l'exemple considéré, puisque les étiquettes sont codées sur 3 bits, telles que représentées au point C de la figure 6a. On constate que, au point C précité de cette figure, seuls les processeurs élémentaires PEi,j contenant les maxima locaux des adresses relatives 3 et 6 sont, après l'itération précitée, maintenus actifs, l'adresse correspondante de ces processeurs pouvant alors être choisie et retenue comme étiquette pour l'ensemble des sommets Soi,j constitutifs des entités discrètes correspondantes définies par des frontières de recherche précédemment mentionnées.

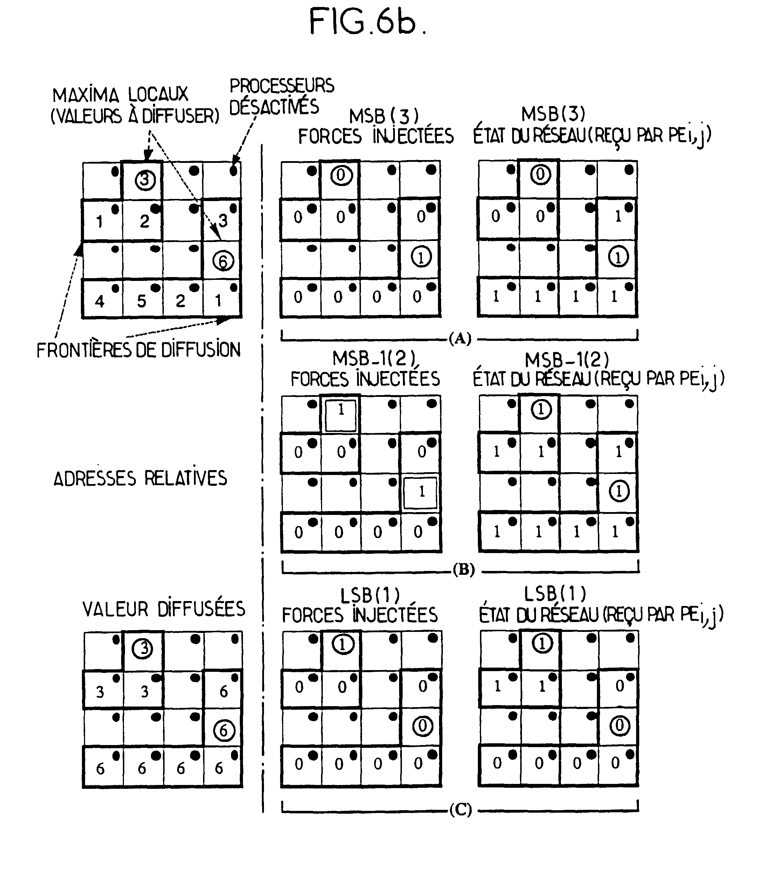

Le choix et le maintien des valeurs d'étiquettes considéré, au niveau des entités discrètes précitées, peut être réalisé conformément à un processus de diffusion segmentée du champ des maxima locaux dans le réseau au niveau des sommets Soi,j de celui-ci, lequel sera décrit en liaison avec la figure 6b.

Sur la figure 6b, on a représenté à gauche de celle-ci de manière analogue à la figure 6a, l'adressage relatif codé sur 3 bits des maxima locaux des adresses déterminées.

Ainsi que représenté sur la figure 6b précitée, le processus de diffusion segmentée consiste alors à effectuer, ainsi que représenté au point A de la figure 6b précitée les maxima locaux ayant été déterminés préalablement ainsi que décrit précédemment, une injection d'une contrainte binaire F = D.ET.Ai,j au niveau de chaque sommet Soi,j, où D représente la valeur du maximum local considéré, et Ai,j représente la valeur mémorisée d'activation-inhibition du processeur élémentaire PEi,j considéré.

Une lecture de la valeur logique actuelle Si,j du sommet Soi,j est alors effectuée, et cet état est imposé par le processeur élémentaire maintenu actif de l'entité discrète considérée, la valeur Si,j d'étiquette correspondant bien entendu au maximum local du bit du plan de bit considéré. Ainsi, au point A de la figure 6b, à gauche de celui-ci sont représentées les contraintes injectées, la valeur 0 correspondant à la valeur du bit le plus significatif MSB de l'adresse relative 3 codée sur 3 bits, cette valeur étant ainsi diffusée dans l'entité discrète correspondante, la valeur 1 de la deuxième entité discrète correspondante étant au contraire diffusée dans celle-ci, ainsi que représenté dans la partie droite du point A de la figure 6b.

De la même manière, une itération est effectuée sur les bits des plans de bits de maxima locaux précités de rang inférieur, c'est-à-dire, ainsi que représenté au point B de la figure 6b, sur le bit MSB - 1 numéroté 2, la contrainte injectée étant égale à 1 pour les deux entités discrètes dans la partie gauche du point B de cette figure 6b, cette valeur étant alors diffusée dans la partie droite de la figure précitée. L'opération précitée est ensuite répétée pour le bit le moins significatif LSB de rang 1, lequel a pour valeur 1 dans l'une des entités discrètes et 0 pour l'autre entité discrète dans la partie gauche du point C de la figure 6b, ces valeurs étant diffusées dans la partie droite de cette même figure sur les entités discrètes correspondantes, c'est-à-dire au niveau des processeurs élémentaires contenus dans les frontières de diffusion correspondantes.

On notera bien sûr que la superposition des parties droites des points A, B, C, de la forme précitée, permet de retrouver la valeur d'étiquette commune attribuée à tous les processeurs élémentaires d'une même entité discrète, cette valeur étant bien entendu celle du maximum local précédemment déterminé ainsi que représenté en partie gauche inférieure de la figure 6b.

On notera que le processus d'étiquetage proprement dit, constitué par la recherche de maxima locaux et diffusion segmentée telle que précédemment décrite, est ainsi constitué par une combinaison des deux processus précédemment mentionnés, ainsi que décrit précédemment.

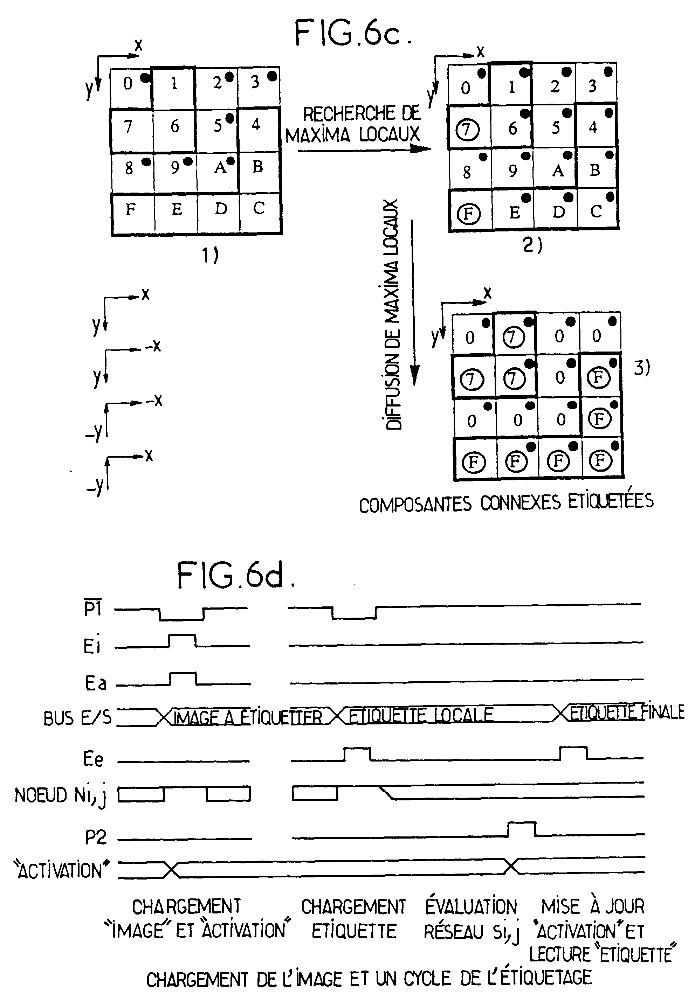

La mise en oeuvre du processus d'étiquetage proprement dit est représentée au niveau d'un réseau de résistances binaires objet de la présente invention à la figure 6c, laquelle, au point 1, représente bien entendu l'attribution d'étiquettes constituées, par exemple, par des adresses relatives en code hexadécimal, à un processeur élémentaire étant associée une adresse relative, puis, au point 2 de la figure 6c, recherche des maxima locaux dans les conditions précédemment décrites, puis, ainsi que représenté au point 3 de cette même figure 6c, diffusion de ces maxima locaux ainsi que décrit précédemment pour l'obtention des composantes connexes ainsi étiquetées.

Un chronogramme des différents signaux mis en oeuvre afin d'assurer une application d'étiquetage des composantes connexes d'une image est donnée en figure 6d. Ce chronogramme donne, d'une part, le séquencement des signaux de précharge P1, de commande d'entrée Ei, Ea, Ee pour chaque processeur élémentaire PEi,j considéré, état du noeud Ni,j du sommet Soi,j correspondant et signal de phase P2 pour le chargement de l'image et le processus d'activation proprement dit, puis ces mêmes signaux dans le cas du chargement de l'étiquette, étiquette initiale ou locale, lecture de la valeur actuelle du signal Si,j au noeud Ni,j correspondant, puis mise à jour de l'activation et de la lecture de l'étiquette ainsi obtenue.

On notera bien entendu que le réseau de résistances binaires objet de la présente invention tel que précédemment décrit n'est pas limité à la seule utilisation pour l'étiquetage des composantes connexes d'images, mais il peut être également utilisé pour d'autres applications, telles que notamment des applications de reconnaissance de forme où de mesures géométriques, des composantes connexes précitées.

Dans ce but, l'attribution de l'adresse relative à chacun des processeurs élémentaires considérés, tels que précédemment décrits en liaison avec la figure 6c, peut alors être remplacée par une pluralité d'attributions d'adresses relatives telles que X,Y ; Y,-X ; -X,-Y ; -Y,X ainsi que représenté en figure 6c. On notera alors que l'itération du processus de détermination des maxima locaux et de diffusion pour les différentes adresses relatives précédemment mentionnées par une combinaison de ces adressages relatifs permet de déterminer, soit l'étendue, soit l'excentricité, soit le rectangle englobant de tout élément discret d'une image correspondant.

On notera que la mise en oeuvre d'un processus d'étiquetage au moyen d'un réseau de résistances binaires objet de la présente invention tel que précédemment décrit pour une image binaire de 256 x 256 pixels à partir d'un circuit intégré de type VLSI, ce circuit étant réalisé selon les spécifications indiquées précédemment en technologique C-MOS 1,5 µm demande au maximum 0,5 milliseconde.

On notera toutefois que le temps de chargement et de déchargement des registres, registre d'images, registre activation-inhibition et registre d'étiquettes, est déterminé par la configuration des entrées-sorties. Une configuration 100 % parallèle n'est pas nécessaire, puisque l'utilisation d'un BUS large, par exemple, de 128 ou 256 bits pour une image de 256 x 256 pixels, sera un bon compromis. En effet, pour un bus de 256 bits, et un cycle de BUS de 100 nanosecondes, le temps total de calcul de l'algorithme d'étiquetage précédemment décrit demande au plus 0,85 ms, c'est-à-dire que l'opérateur précédemment décrit et le réseau de résistances binaires objet de la présente invention permettent le traitement de plus de 1000 trames d'images par seconde.

Enfin, on notera que le réseau de résistances binaires objet de la présente invention, peut également fonctionner comme co-processeur dédié à la centralisation et à la diffusion d'informations dans des opérations telles que la détection de déplacement d'objets.

## Revendications

1. Réseau de résistances binaires comprenant une pluralité de sommets reliés chacun par des arcs, formant résistance binaire, dans lequel chaque sommet (Soi,j) comporte un processeur élémentaire (PEi,j) permettant, à partir d'un contrôleur central (C), d'associer à chacun des arcs (a) au moins une fonction associative et à un ou plusieurs sommets (Soi,j) une contrainte binaire F1,F2, permettant d'assurer un traitement sélectif de données mémorisées au niveau de chacun des processeurs élémentaires (PEi,j), chaque arc dudit réseau étant muni d'une fonction associative OU, par l'intermédiaire de chaque processeur élémentaire, et chaque arc (a) du réseau formant une chaîne de Manchester accélérée, le temps d'établissement du réseau, après application des contraintes binaires locales, étant ainsi linéaire avec le nombre de sommets, caractérisé en ce que chaque processeur élémentaire (PEi,j) comporte au moins :
- un registre (1) de mémorisation de l'information numérisée à traiter, ledit registre étant commandé en écriture/ lecture à partir d'une liaison par BUS entrées-sorties et délivrant, en lecture, un signal (config) de configuration du réseau,
- un registre (2) de commande d'activation-inhibition de l'injection de contrainte binaire au niveau du sommet considéré correspondant, auquel ledit processeur élémentaire (PE) est associé, ledit registre de commande étant commandé en écriture/lecture à partir de ladite liaison par BUS entrées-sorties et délivrant en lecture un signal (masq) de masquage de l'injection de la contrainte binaire,
- un registre (3) de mémorisation de la contrainte binaire à imposer audit sommet considéré,
- un circuit (4) formant noeud (Ni,j) dudit réseau, ce noeud et ledit processeur élémentaire (PE) correspondant formant le sommet considéré dudit réseau de résistances binaires.

2. Réseau de résistances binaires selon la revendication 1, caractérisé en ce que chaque processeur élémentaire (PEi,j) permet d'assurer au moins :
- la configuration du réseau par le choix et la commande de la valeur de la résistance binaire de chaque arc réunissant deux sommets consécutifs, par l'intermédiaire dudit registre (1),
- l'injection de la valeur de contrainte F1,F2 au niveau de chaque sommet et lecture de l'état local résultant Si,j pour le sommet (Soi,j) considéré, par l'intermédiaire dudit registre (2),
- la mémorisation d'un état conditionnel Ai,j en fonction de la contrainte binaire injectée et de l'état local du sommet considéré, par l'intermédiaire dudit registre (3),
- l'itération successive des étapes d'injection et de mémorisation pour une pluralité de valeurs de contraintes binaires successives correspondant à des données numérisées sous forme de plans de bits, les opérations de configuration, d'injection, de mémorisation et d'itération étant réalisées par l'intermédiaire desdits registres (1, 2, 3) et dudit circuit (4) formant noeud.

3. Réseau de résistances binaires selon la revendication 1, caractérisé en ce que ledit circuit (4) formant noeud comprend :
- quatre transistors de commutation formant chacun transistor d'arc, chaque transistor d'arc repéré (N,S,E,W) étant destiné à assurer la liaison du noeud considéré avec un noeud voisin portant le même repère, chaque transistor d'arc recevant sur son électrode de commande ledit signal de configuration (config) délivré par le registre de mémorisation de l'information numérisée à traiter,
- un transistor (40) de précharge connecté entre la tension d'alimentation et ledit noeud, ce transistor de précharge étant commandé en commutation par un signal de précharge (P1),
- un circuit (45,46,47) de commande d'activation-inhibition de l'injection de la contrainte binaire au niveau du sommet considéré, ce circuit de commande d'activation inhibition comprenant, d'une part, en cascade, entre ledit noeud et le potentiel de référence, un premier transistor (45) d'activation inhibition recevant sur son électrode de commande ledit signal (masq) de masquage délivré en lecture par ledit registre d'activation inhibition, un deuxième (46) transistor d'injection de contrainte binaire recevant sur son électrode de commande ledit signal de contrainte binaire délivré par ledit registre de mémorisation de contrainte binaire, un troisième (47) transistor de terminaison de type de conduction opposé à celui du transistor de précharge, et, d'autre part, un circuit de réaction, formé par un transistor (48) de réaction monté en commutation entre ledit noeud et le point commun entre le deuxième (46) et le troisième (47) transistor et par un inverseur logique (49) dont l'entrée est connectée audit noeud et dont la sortie, délivrant un signal Si,j représentatif de l'état local du sommet considéré, est connectée à l'électrode de commande dudit transistor (48) de réaction et à une entrée de contrôle dudit registre (2) mémoire d'activation-inhibition et du registre (3) de mémorisation de contrainte binaire.

4. Réseau de résistances binaires selon les revendications 1 et 3, caractérisé en ce que lesdits circuits formant noeud (Ni,j) dudit réseau, interconnectés par lesdits transistors d'arc, forment une chaîne de Manchester accélérée, chaque circuit de commande interconnecté par les transistors d'arc rendus conducteurs permettant d'effectuer suite à une étape de précharge permettant d'amener le potentiel de chaque noeud (Ni,j) à la valeur de la tension d'alimentation,
- une étape de fin de précharge et de connexion dudit troisième transistor (47) de terminaison, et, en fonction du signal de masquage (masq) et du signal de contrainte binaire (F1) appliqués sur lesdits premier et deuxième transistors,
- une étape de décharge des capacités parasites du noeud (Ni,j) considéré, par l'intermédiaire du circuit de réaction (48,49), ce qui permet de provoquer une décharge correspondante successive, de type impulsionnel, des capacités parasites de tous les noeuds interconnectés au sommet (Soi,j) correspondant, formant les sommets connexes de ce dernier, siège de la décharge initiale, par l'intermédiaire d'un ou plusieurs transistors d'arc formant résistance binaire, et d'assurer ainsi la diffusion segmentée de la contrainte binaire locale appliquée au niveau du sommet considéré vers lesdits sommets connexes.

5. Réseau de résistances binaires selon les revendications 3 et 4, caractérisé en ce que lesdits transistors sont des transistors CMOS réalisés en circuit intégré.

6. Utilisation d'un réseau de résistances binaires selon l'une des revendications 2 à 5 précédentes pour l'étiquetage des composantes connexes d'une image binaire, ou d'un plan de bits formant image élémentaire binaire d'une image binarisée, caractérisée en ce que ladite utilisation consiste à :
- attribuer à l'ensemble des bits de valeur donnée de ladite image une étiquette initiale locale commune,
- à charger ladite image à étiqueter dans un système mémoire de travail,
- à charger, à partir du système mémoire de travail, ladite image dans les registres image et registre activation-inhibition de chaque processeur élémentaire (PEi,j), un processeur élémentaire étant associé à un pixel Pi,j, de l'image et seuls les processeurs élémentaires (PEi,j), associés à un pixel Pi,j, de valeur donnée de l'image restant actifs,
- à effectuer un processus d'étiquetage proprement dit consistant en :
. un processus d'initialisation comprenant une étape de chargement du bit le plus significatif MSB des étiquettes locales au niveau du registre de mémorisation d'étiquette de chaque processeur actif (PEi,j), de façon à réaliser sur le réseau un chargement d'un plan de bit d'étiquettes,
. un processus d'étiquetage par plan de bits, pour le plan de bits considéré, consistant à effectuer successivement une précharge du réseau (P1), une injection, au niveau des sommets (Soi,j) correspondants du réseau, des contraintes binaires (F) correspondant au plan de bits chargé, une recherche des extrema locaux aux sommets (Soi,j) du réseau, une diffusion segmentée du champ des extrema locaux dans le réseau, une mise à jour du registre activation-inhibition, une mémorisation des valeurs des registres des étiquettes des processeurs élémentaires (PEi,j), comme plan de bit des étiquettes finales dans le système mémoire,
- à réitérer le processus d'étiquetage proprement dit pour chaque plan de bits de rang inférieur MSB-1 des étiquettes jusqu'au bit le moins significatif LSB,
- à mémoriser et lire dans le système mémoire l'ensemble des plans de bits des étiquettes finales pour lire l'image étiquetée.

7. Utilisation selon la revendication 6, caractérisée en ce que le processus de recherche des extrema locaux aux sommets (Soi,j), du réseau consiste à :
- configurer ledit réseau par définition des frontières de recherche dans l'image, à chaque sommet (Soi,j) du réseau étant associé une valeur actuelle du pixel d'image Si,j, 0 ou 1,
- injecter le bit le plus significatif MSB sous forme de contrainte binaire au niveau des sommets (Soi,j) du réseau,
- masquer tous les processeurs élémentaires (PEi,j), pour lesquels le bit le plus significatif MSB est différent de la valeur actuelle Si,j, du sommet (Soi,j).
- effectuer une itération des étapes d'injection et de masquage pour tout bit de rang MSB-1 inférieur jusqu'au rang du bit le moins significatif LSB, seuls les processeurs élémentaires (PEi,j), contenant les extrema locaux précités étant ainsi maintenus actifs.

8. Utilisation selon la revendication 6, caractérisée en ce que ledit processus de diffusion segmentée du champ des extrema locaux dans le réseau au niveau des sommets (Soi,j), de celui-ci consiste, les extrema locaux ayant été déterminés préalablement :
- à effectuer une injection d'une contrainte binaire F = D.ET.A(i,j), où D représente la valeur de l'extremum local et A(i,j) représente la valeur mémorisée du registre d'activation-inhibition du processeur élémentaire (PEi,j) considéré,
- à effectuer une lecture de la valeur logique actuelle Si,j, du sommet (Soi,j), correspondant.

9. Utilisation selon la revendication 6, caractérisée en ce que ladite étiquette initiale est constituée par l'attribution à chaque processeur élémentaire (PEi,j) de l'adresse relative de chaque sommet (Soi,j), ou pixel Pi,j.

10. Utilisation selon la revendication 9, caractérisé en ce que l'attribution de l'adresse relative est constituée par une pluralité d'attributions d'adresses relatives telles que X,Y ; Y,-X ; -X,-Y ; -Y,X ce qui permet de retenir dans le processus de détermination des maxima locaux, respectivement
. X, Y l'adresse la plus en bas à gauche,
. Y,-X l'adresse la plus en haut à gauche,
. -X,-Y l'adresse la plus en haut à droite,
. -Y, X l'adresse la plus en bas à droite,
une combinaison de ces adressages relatifs permettant de déterminer l'étendue, l'excentricité, le rectangle englobant de tout élément discret d'une image.

## Patentansprüche

1. Netz von binären Widerständen mit einer Mehrzahl von jeweils durch Kanten verbundenen und einen binären Widerstand bildenden Endpunkten, in dem jeder Endpunkt (Soi,j) einen Einzelprozessor (PEi,j) aufweist, der es ermöglicht, ausgehend von einer zentralen Steuereinheit (C) einer jeden der Kanten (a) mindestens eine Verknüpfungsfunktion und einem oder mehreren Endpunkten (Soi,j) eine binäre Bedingung F1,F2 zuzuordnen, wodurch die Durchführung einer selektiven Verarbeitung von Daten ermöglicht wird, die an jedem der Einzelprozessoren (PEi,j) gespeichert sind, wobei jede Kante des Netzes über jeden der Einzelprozessoren mit einer ODER-Verknüpfungsfunktion versehen ist, und jede Kante (a) des Netzes eine beschleunigte Manchester-Kette darstellt, wodurch sich die Zeit zum Erstellen des Netzes nach Anwenden der örtlichen binären Bedingungen somit linear zu der Anzahl von Endpunkten verhält, dadurch gekennzeichnet, daß jeder Einzelprozessor (PEi,j) mindestens aufweist:
- ein Register (1) zum Speichern der zu verarbeitenden digitalen Information, wobei das Register ausgehend von einer Eingabe-/Ausgabe-Busverbindung lese/schreibgesteuert wird und ein Signal zum Konfigurieren des Netzes ausliest,
- ein Register (2) zum Steuern der Aktivierung/Deaktivierung des Einfügens der binären Bedingung an dem jeweils entsprechenden Endpunkt, dem der Einzelprozessor (PE) zugeordnet ist, wobei das Steuerregister ausgehend von der Eingabe-/Ausgabe-Busverbindung lese-/schreibgesteuert wird und ein Signal zum Maskieren des Einfügens der binären Bedingung ausliest,
- ein Register (3) zum Speichern der binären Bedingung, die auf den betreffenden Endpunkt angewendet werden soll,
- eine Schaltung (4) zum Bilden eines Knotens (Ni,j) des Netzes, wobei dieser Knoten und der entsprechende Einzelprozessor (PE) den betreffenden Endpunkt des Netzes von binären Widerständen bilden.

2. Netz von binären Widerständen nach Anspruch 1, dadurch gekennzeichnet, daß jeder Einzelprozessor (PEi,j) es gestattet, mindestens durchzuführen:
- das Konfigurieren des Netzes mittels Auswahl und Steuerung des Wertes des binären Widerstandes von jeder Kante, die zwei aufeinanderfolgende Endpunkte verbindet, durch das Register (1),
- das Einfügen des Wertes der Bedingung F1, F2 an jedem Endpunkt und Lesen des resultierenden örtlichen Zustands Si,j für jeden betreffenden Endpunkt (Soi,j) durch das Register (2),
- das Speichern eines Bedingungszustands Ai,j als Funktion der eingefügten binären Bedingung und des örtlichen Zustands des betreffenden Endpunkts durch das Register (3),
- aufeinanderfolgende Iteration der Schritte des Einfügens und des Speicherns für eine Mehrzahl von Werten von aufeinanderfolgenden binären Bedingungen, die digitalen Daten in Form von Bit-Maps entsprechen, wobei die Arbeitsschritte des Konfigurierens, Einfügens, Speicherns und Iterierens duch die Register (1, 2, 3) und die Knotenbildungsschaltung (4) durchgeführt werden.

3. Netz von binären Widerständen nach Anspruch 1, dadurch gekennzeichnet, daß die Knotenbildungsschaltung (4) aufweist:
- vier Schalttransistoren, die jeweils einen Kantentransistor bilden, wobei jeder markierte Kantentransistor (N,S,E,W) dazu vorgesehen ist, die Verbindung des betreffenden Knotens mit einem die gleiche Markierung tragenden, benachbarten Knoten durchzuführen, wobei jeder Kantentransistor an seiner Steuerelektrode das von dem Register zum Speichern der zu verarbeitenden digitalen Information ausgegebene Konfigurierungssignal empfängt,
- einen zwischen die Versorgungsspannung und den Knoten geschalteten Vorladungstransistor (40), wobei der Vorladungstransistor durch ein Vorladungssignal (P1) umgeschaltet wird,
- eine Steuerschaltung (45, 46, 47) zum Aktivieren/Deaktivieren des Einfügens der binären Bedingung an dem betreffenden Endpunkt, wobei die Aktivierungs-/Deaktivierungs-Steuerschaltung einerseits in Kaskadenschaltung zwischen dem Knoten und dem Bezugspotential aufweist: einen ersten Aktivierungs/Deaktivierungs-Transistor (45), der an seiner Steuerelektrode das von dem Aktivierungs/Deaktivierungs-Register ausgelesene Maskiersignal empfängt, einen zweiten (46) Transistor zum Einfügen der binären Bedingung, der an seiner Steuerelektrode das von dem Register zum Speichern der binären Bedingung ausgegebene Binärbedingungssignal empfängt, einen dritten (47) Abschlußtransistor vom entgegengesetzten Leitungstyp zu dem des Vorladungstransistors, und anderseits aufweist: eine Reaktionsschaltung, gebildet von einem umschaltbar zwischen dem Knoten und dem gemeinsamen Punkt zwischen dem zweiten (46) und dritten (47) Transistor angeordneten Reaktionstransistor (48) sowie von einem Logikinverter (49), dessen Eingang an den Knoten angeschlossen ist, und dessen Ausgang, der ein für den örtlichen Zustand des betreffenden Endpunktes repräsentatives Signal Si,j ausgibt, an die Steuerelektrode des Reaktionstransistors (48) und an einen Steuereingang des Aktivierungs/Deaktivierungs-Speicherregisters (2) und des Registers (3) zum Speichern der binären Bedingung angeschlossen ist.

4. Netz von binären Widerständen nach den Ansprüchen 1 und 3, dadurch gekennzeichnet, daß die über die Kantentransistoren untereinander verbundenen Schaltungen, welche Knoten (Ni,j) des Netzes bilden, eine beschleunigte Manchester-Kette darstellen, wobei jede der Steuerschaltungen, die über die in den leitenden Zustand versetzten Kantentransistoren untereinander verbunden sind, es ermöglicht, im Anschluß an einen Vorladungsschritt, mit dem das Potential eines jeden Knotens (Ni,j) auf den Wert der Versorgungsspannung gebracht werden kann, durchzuführen:
- einen Schritt zum Beenden der Vorladung und Verbinden des dritten Abschlußtransistors (47), sowie, in Abhängigkeit von dem Maskiersignal (masq) und dem an den ersten und zweiten Transistor angelegten Binärbedingungssignal (F1),
- einen Schritt zum Entladen der Streukapazitäten des betreffenden Knotens (Ni,j) durch die Reaktionsschaltung (48, 49), wodurch eine entsprechende darauffolgende Impulsentladung der Streukapazitäten aller Knoten, die mit dem entsprechenden Endpunkt (Soi,j) verbunden sind und die mit diesem, dem Ort der anfänglichen Entladung, zusammenhängenden Endpunkte darstellen, mittels eines oder mehrerer Kantentransistoren hervorgerufen werden kann, die einen binären Widerstand bilden, und somit die segmentierte Diffusion der am betreffenden Endpunkt angewendeten örtlichen binären Bedingung zu den zusammenhängenden Endpunkten durchgeführt werden kann.

5. Netz von binären Widerständen nach den Ansprüchen 3 und 4, dadurch gekennzeichnet, daß die Transistoren als integrierte Schaltung ausgeführte CMOS-Transistoren sind.

6. Verwendung eines Netzes von binären Widerständen nach einem der vorhergehenden Ansprüche 2 bis 5 zum Etikettieren der zusammenhängenden Komponenten einer binären Abbildung oder einer Bit-Map, welche ein binäres Elementarbild einer binarisierten Abbildung darstellt, dadurch gekennzeichnet, daß die Verwendung aus den Schritten besteht:
- Zuordnen eines gemeinsamen anfänglichen örtlichen Etiketts zu der Gesamtheit der Bits mit vorgegebenem Wert der Abbildung,
- Laden der zu etikettierenden Abbildung in ein Arbeitsspeichersystem,
- Laden der Abbildung aus dem Arbeitsspeichersystem in das Bildregister und Aktivierungs-/Deaktivierungs-Register eines jeden Einzelprozessors (PEi,j), wobei ein Einzelprozessor einem Pixel Pi,j der Abbildung zugeordnet ist, und nur die einem Pixel Pi, j mit vorgegebenem Wert der Abbildung zugeordneten Einzelprozessoren (PEi,j) aktiv bleiben,
- Durchführen eines eigentlichen Etikettiervorgangs, bestehend aus:
• einem Initialisierungsvorgang mit einem Schritt des Ladens des höchstwertigen Bit MSB der örtlichen Etikette an dem Etikettspeicherregister eines jeden aktiven Prozessors (PEi,j), so daß an dem Netz ein Laden einer Bit-Map von Etiketten durchgeführt wird,
• einem Etikettiervorgang pro Bit-Map für die betreffende Bit-Map, der darin besteht, aufeinanderfolgend durchzuführen: eine Vorladung des Netzes (P1), eine Einfügung der binären Bedingungen (F), die der geladenen Bit-Map entsprechen, an den entsprechenden Endpunkten (Soi,j) des Netzes, eine Suche nach den örtlichen Extrema an den Endpunkten (Soi,j) des Netzes, eine segmentierte Diffusion des Feldes der örtlichen Extrema in dem Netz, eine Aktualisierung des Aktivierungs/Deaktivierungs-Registers, ein Speichern der Werte der Register der Etikette der Einzelprozessoren (PEi,j) als Bit-Map der endgültigen Etikette in dem Speichersystem,
- Reiterieren des eigentlichen Etikettiervorgangs für jede Bit-Map von geringerwertigen Bits MSB-1 der Etikette bis hin zu dem niedrigstwertigen Bit LSB,
- Speichern und Einlesen der Gesamtheit der Bit-Maps der endgültigen Etikette in das Speichersystem zum Lesen der etikettierten Abbildung.

7. Verwendung nach Anspruch 6, dadurch gekennzeichnet, daß der Vorgang der Suche nach den örtlichen Extrema an den Endpunkten (Soi,j) des Netzes aus den Schritten besteht:
- Konfigurieren des Netzes durch Definieren der Suchgrenzen in der Abbildung, wobei jedem Endpunkt (Soi,j) des Netzes ein aktueller Wert Si,j, 0 oder 1, der Pixel der Abbildung zugeordnet wird,
- Einfügen des höchstwertigen Bit MSB in Form einer binären Bedingung an den Endpunkten (Soi,j) des Netzes,
- Maskieren aller Einzelprozessoren (PEi,j), bei denen das höchstwertige Bit MSB von dem aktuellen Wert Si,j, des Endpunktes (Soi,j) verschieden ist,
- Durchführen einer Iteration des Einfügungsschritts und des Maskierschritts für jedes niedrigerwertige Bit MSB-1 bis hin zum Rang des niedrigstwertigen Bit LSB, so daß nur die Einzelprozessoren (PEi,j), welche die genannten örtlichen Extrema enthalten, aktiviert bleiben.

8. Verwendung nach Anspruch 6, dadurch gekennzeichnet, daß der Vorgang der segmentierten Diffusion des Feldes der örtlichen Extrema in dem Netz an seinen Endpunkten (Soi,j), bei vorausgehender Bestimmung der örtlichen Extrema, aus den Schritten besteht:
- Durchführen eines Einfügens einer binären Bedingung F = D•ET•A(i,j), wobei D für den Wert des örtlichen Extremums steht und A(i,j) für den gespeicherten Wert des Aktivierungs-/Deaktivierungs-Registers des betreffenden Einzelprozessors (PEi,j) steht,
- Durchführen eines Lesens des aktuellen logischen Wertes Si,j, des entsprechenden Endpunktes (Soi,j).

9. Verwendung nach Anspruch 6, dadurch gekennzeichnet, daß das anfängliche Etikett aus der Zuordnung der relativen Adresse eines jeden Endpunktes (Soi,j), oder Pixel Pi,j zu jedem Einzelprozessor (PEi,j) besteht.

10. Verwendung nach Anspruch 9, dadurch gekennzeichnet, daß die Zuordnung der relativen Adresse aus einer Mehrzahl von Zuordnungen von relativen Adressen wie X,Y; Y,-X; -X,-Y; -Y,X besteht, wodurch es ermöglicht wird, bei dem Vorgang der Bestimmung der örtlichen Maxima jeweils beizubehalten:
• X, Y die Adresse ganz unten links,
• Y,-X die Adresse ganz oben links,
• -X,-Y die Adresse ganz oben rechts,
• -Y, X die Adresse ganz unten rechts,
wobei eine Kombination dieser relativen Adressierungen es gestattet, die Erstreckung, die Exzentrizität, das Einfassungsrechteck eines jeden diskreten Elements einer Abbildung zu bestimmen.

## Claims

1. A binary resistor network comprising a plurality of peaks linked together by arches, each of said arches forming a binary resistor and each of said peaks (Soi,j) comprising an elementary processor (Pei,j) for processing stored local data, said binary resistor network further comprising a central controller (C) for associating at least one associative function with each of said arches (a) and a binary constraint F1, F2 with at least one of said peaks (Soi,j) so as to perform selective processing of said stored local data at the level of each of said elementary processor (Pei,j), the elementary processor of each arch of said network being provided with an associative OR function and each arch (a) of said network forming an accelerated Manchester chain, so that the establishment time of said binary resistor network is linear with the number of peaks once local binary constraint have been applied, characterized by each elementary processor (Pei,j) comprising at least:
- a data storage register (1) for storing the local data to be processed, said register being read/write controlled from an inputs-outputs BUS link and delivering on reading, a configuration signal of said network;
- a control register (2) for activation-inhibition control of the injecting of a binary constraint at the site of a peak being processed to which said processor (PE) is associated, said control register being read/write controlled from said inputs-outputs BUS link and delivering, on reading, a masking signal for masking the injecting of the binary constraint;
- a binary constraint storage register (3) for storing said binary constraint to be imposed on said peak being processed;
- a circuit (4) forming a node (Ni,j) of said network, said node and said corresponding elementary processor (PE) forming said peak of said binary resistor network.

2. The binary resistor network according to claim 1, characterized by said elementary processor (PEi,j) allowing:
- configuring said binary resistor network by choosing and controlling a value for the binary resistor of each arch joining two consecutive peaks, through said data storage register (1),
- injecting said binary constraint F1, F2 at the site of each peak and reading of a resultant local state Si,j for a peak (Soi,j) then being processed by the processor through said control register (2),
- storing a conditional state Ai,j as a function of the binary constraint injected and of the local state of said peak being processed, through said register (3),
- producing successive iterations of the injecting of the binary constraint and the storing of the conditional state for a plurality of values of successive binary constraints corresponding to digitized data comprising bit maps, with the configuring, injecting, storing and producing successive iteration being performed using said registers (1,2,3) and circuit (4) forming a node.

3. The binary resistor network according to claim 1, characterized by said circuit (4) forming a node comprising:
- four switching transistors each forming an arch transistor, which has an index (N,S,E,W) and provides a link, through the same index of the node being processed, with a neighbouring node bearing the same index, each arch transistor including a control electrode for receiving said configuration signal delivered by said local data storage register,
- a precharge transistor (40) of a first conduction type connected between a supply voltage and said node-forming circuit, said precharge transistor being switch controlled by a precharge signal (P1),
- a control circuit (45,46,47) for activation-inhibition control of the injecting of the binary constraint into the site of the peak being processed, said control circuit comprising, connected in cascade between said node-forming circuit and a reference potential, a first activation-inhibition transistor (45) including a control electrode for receiving said masking signal which is delivered on reading by said control circuit, a second binary constraint injection transistor (46) including a control electrode for receiving said binary constraint signal delivered by said binary constraint storage register, a third terminating transistor (47) of a conduction type opposite to that of the conduction type of said precharge transistor, said control circuit further comprising a feedback circuit comprising a feedback transistor (48) operating as a switch between said node-forming circuit and a common point between said second (46) and third (47) transistors and by a logic inverter (49) having an input connected to said node-forming circuit and an output delivering a signal Si,j representing the status of the peak being processed which is connected to a control electrode of said feedback transistor (48) and to a control input of the said control register (2), and said binary. constraint storage register (3).

4. The binary resistor network according to claims 1 and 3, characterized by said circuits forming a node (Ni,j) of said network being connected through said transistors forming an arch and forming an accelerated Manchester chain, each control circuit connected through conductive transistors forming an arch allowing to perform a precharge step to put the voltage potential of each node (Ni,j) to the power supply voltage value,
- a step of precharge termination connection of said third terminating transistor (47), and, as a function of said masking signal (masq) and said binary constraint (F1) which are applied to said first and second transistors,
- a discharge step of the stray capacitors of said node (Ni,j) through said feedback circuit (48,49), thereby allowing to produce a successive corresponding pulsed discharge of said stray capacitors of all the nodes which are connected to the corresponding peak (Soi,j) and form the related peaks of the latter, which the first discharge is initiated through one or more transistor forming an arch and a binary resistor, so as to allow a segmented diffusion of said local binary constraint which is applied to said peak towards said related peaks.

5. The binary resistor network according to claims 3 and 4, characterized by said transistors implemented as integrated CMOS circuit.

6. A use of the binary resistor network according to one of the preceding claims 2 to 5 for labelling related components of a binary image or of a bit map forming an elementary binary image of a binary-converted image, characterized by:
- attributing a common local initial label to a set of bits of given value of said binary image,
- loading the image of the labelled into a working memory system,
- loading said binary image into said image registers and said control register of each elementary processor (PEi,j), an elementary processor being associated with a pixel Pi,j of the binary image, and only elementary processors (PEi,j) associated with a pixel Pi,j of given value of said binary image being maintained remaining in an active mode of operation,
- carrying out a process of labelling comprising:
• initialization processing comprising a step of loading of the most significant bit MSB of the local labels into a label storage register of each active elementary processor (PEi,j) so as to perform on said binary resistor network a loading of a bit map of labels,
• labelling bit map processing comprising successively carrying out a precharging (P1) of said binary resistor network, injecting, at the site of corresponding peaks (Soi,j) of said binary resistor network, binary constraints (F) corresponding to said loaded bit map, searching for local extremes at the peaks (Soi,j) of said binary resistor network, providing a segmented diffusion of a field of said local extremes in the binary resistor network, updating of said control register for activation-inhibition, storing in memory in label storage registers of said elementary processors (PEi,j) of the values of said labels, said stored values being thus stored as a bit map of final labels in the memory system,
- reiterating said process of labellinq for each successive lower-rank MSB-1 bit map of the labels down to the least significant bit LSB,
- storing and reading in said memory system a resultant set of bit maps of the said final labels so as to read the labelled image.

7. A use according to claim 6, characterized by said searching for the local extremes at the peaks (Soi,j) of said binary resistor network comprising:
- configuring said binary resistor network by defining search boundaries in said binary image, an instant value of the binary image pixel Si,j, 0 or 1, being associated with each peak (Soi,j) of said binary resistor network,
- injecting the most significant bit MSB in the form of a binary constraint at the sites of the peaks (Soi,j) of said binary resistor network,
- masking the elementary processors (PEi,j) for which the most significant bit MSB is different from the instant value Si,j of the peak (Soi,j), and
- carrying out an iteration of the injecting of the most significant bit and the masking of the elementary processors for each lower-rank bit MSB-1, down to least significant bit rank LSB, with only the elementary processors (PEi,j) containing said local extremes being maintained in said active mode of operation.

8. A use according to claim 6, characterized by said segmented diffusion of the field of said local extremes at the peaks (Soi,j) of said binary resistor network comprising, said local extremes having been established in advance:
- injecting a binary constraint F = D.AND.Ai,j, where D represents the stored value within said control register for activation-inhibition of the corresponding elementary processor (PEi,j),
- reading of the current logic value Si,j of the corresponding peaks (Soi,j).

9. A use according to claim 6, characterized by said initial label being obtained by the relative address of each peak (Soi,j) or pixel Pi,j to each elementary processor (PEi,j).

10. A use according to claim 9, characterized by said attributing the relative address comprising a plurality of attributions of relative addresses X,Y; Y-X; -X,-Y; -Y,X thereby enabling adopting of local maxima, wherein
■ X,Y is the lowest left-hand address,
■ Y,-X is the highest, left-hand address,
■ -X,-Y is the highest, right-hand address,
■ -Y, X is the lowest, right-hand address,
a combination of these relative addressings enabling a determination of image extent, image eccentricity, and a rectangle enclosing any discrete element of an image.
